(19) Europäisches Patentamt
European Patent Office
Office européen des brevets

(11) **EP 4 000 717 A1**

(12) **EUROPEAN PATENT APPLICATION**
published in accordance with Art. 153(4) EPC

(43) Date of publication:
**25.05.2022 Bulletin 2022/21**

(21) Application number: **20809549.7**

(22) Date of filing: **20.05.2020**

(51) International Patent Classification (IPC):
**B01D 53/79** $^{(2006.01)}$     **B01D 53/78** $^{(2006.01)}$
**B01D 53/56** $^{(2006.01)}$

(86) International application number:
**PCT/KR2020/006562**

(87) International publication number:
**WO 2020/235921 (26.11.2020 Gazette 2020/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2019 KR 20190059545**

(71) Applicant: **Gdchem Co., Ltd.**
**Gimje-si, Jeollabuk-do 54317 (KR)**

(72) Inventors:
• **RYU, Hwan-Woo**
**Daegu-41560 (KR)**
• **RYU, Yeon-Seok**
**Daegu 41560 (KR)**
• **OH, Mi-Hye**
**Jeonju-si, Jeollabuk-do 54867 (KR)**
• **RYU, Na-Hyeon**
**Jeonju-si, Jeollabuk-do 54867 (KR)**

(74) Representative: **Swea IP Law AB**
**Forskargatan 20G**
**151 36 Södertälje (SE)**

(54) **COMPOSITION FOR REDUCING NITROGEN OXIDE AND METHOD FOR REDUCING NITROGEN OXIDE**

(57) The purpose of the present invention is to provide a composition, an additive, or a method for reducing NOx, wherein the method, which uses an ammonia supply source such as aqueous urea or aqueous ammonia to reduce NOx, has an improved reduction rate, and thus has good thermal efficiency and minimal heat loss.

EP 4 000 717 A1

**Description**

[Technical Field]

Embodiments of the present invention relate to a composition for reducing nitrogen oxide and a method for reducing nitrogen oxide.

[Background Art]

Exhaust gas generated in the course of burning fossil fuel contains NOx components, which have been found as the cause of acid rain and respiratory diseases, and nitrogen oxides (NOx) in the atmosphere include $N_2O$ (nitrous oxide), NO (nitric oxide), $N_2O_3$ (nitrogen trioxide), $NO_2$ (nitrogen dioxide), $N_2O_5$ (nitrogen peroxide), and $NO_3$ present in the form of an unstable component. Among these components, $N_2O$, NO, and $NO_2$ are present at a problematic level in the atmosphere.

In order to remove the NOx components from the exhaust gas, selective noncatalytic reduction (SNCR) or selective catalytic reduction (SCR) using an ammonia-based reductant is used in various ways.

In SNCR, the ammonia-based reductant is sprayed into a high temperature region (750°C to 950°C) in a fluidized-bed combustion furnace in order to reduce NOx emission through reaction represented by Equation (1), and in SCR, a catalyst is used to promote reduction represented by Equation (2) in a medium temperature region (250°C to 400°C) of the exhaust gas.

$$\text{NOx의 SNCR 반응}: 2NO + 2CO(NH_2)_2 + 2O_2 \xrightarrow{750-950℃} 3N_2 + 2CO_2 + 4H_2O \quad (1)$$

$$\text{NOx의 SCR 반응}: 4NO + 4NH_2 + O_2 \xrightarrow[\text{Catalyst}]{250-400℃} 4N_2 + 6H_2O \quad (2)$$

SNCR has a very low NOx reduction rate of about 60% according to the following formula and uses a large amount of water, causing a negative influence on thermal efficiency.

$$NO_\% \, reduction = \frac{C_{No_{x,in}} - C_{No_{x,out}}}{C_{No_{x,in}}} \times 100\%$$

In another NOx reduction technique, generation of NOx is minimized or prevented in a combustion region through control of a combustion process, which is performed by a technique of controlling so-called thermal NOx generated at high temperature or by a technique of controlling NOx in fuel, that is, fuel NOx. Thermal NOx is mainly generated through oxidation of nitrogen molecules, that is, N2, in combustion air at high temperature and the main control strategy for reducing thermal NOx is to reduce the highest flame temperature or the excess oxygen concentration.

[Disclosure]

[Technical Problem]

Embodiments of the present invention provide a composition or additive for reducing NOx or a method for reducing NOx, which can guarantee good thermal efficiency without heat loss through further improvement in reduction rate of NOx in a process of reducing NOx using an ammonia source, such as aqueous urea and aqueous ammonia.

[Technical Solution]

One aspect of the present invention relates to a composition for reducing nitrogen oxide, including:

(A) at least one ammonia source selected from the group consisting of aqueous urea, aqueous ammonia and derivatives thereof; and
(B) at least one nitrogen oxide-reducing aid selected from the group consisting of an oxygen radical or oxygen supply substance and a hydroxyl group supply substance,
wherein a weight ratio of the ammonia source (A) to the nitrogen oxide-reducing aid (B) is in the range of 5:5 to 9:1 in terms of solid content.

Another aspect of the present invention relates to an additive for reducing nitrogen oxide, which includes: at least one nitrogen oxide-reducing aid selected from the group consisting of an oxygen radical or oxygen supply substance and a hydroxyl group supply substance.

A further aspect of the present invention relates to a method for reducing nitrogen oxide, including:

supplying (A) at least one ammonia source selected from the group consisting of aqueous urea, aqueous ammonia and derivatives thereof to an NOx-containing exhaust gas or a boiler; and

supplying (B) at least one nitrogen oxide-reducing aid selected from the group consisting of an oxygen radical or oxygen supply substance and a hydroxyl group supply substance to the ammonia source, the NOx-containing exhaust gas or the boiler, wherein a weight ratio of the ammonia source (A) to the nitrogen oxide-reducing aid (B) is adjusted to be in the range of 5:5 to 9:1 in terms of solid content.

[Advantageous Effects]

The method or composition according to the present invention secures a NOx reduction rate of 65% or more.

The method or composition according to the present invention improves energy efficiency through reduction in heat loss caused by latent heat by reducing the amount of water used in a NOx reduction process.

The method or composition according to the present invention has an effect of reducing generation of fine dust.

[Best Mode]

One aspect of the present invention relates to a composition for reducing nitrogen oxide, including:

(A) at least one ammonia source selected from the group consisting of aqueous urea, aqueous ammonia and derivatives thereof; and

(B) at least one nitrogen oxide-reducing aid selected from the group consisting of an oxygen radical or oxygen supply substance and a hydroxyl group supply substance,

wherein a weight ratio of the ammonia source (A) to the nitrogen oxide-reducing aid (B) is in the range of 5:5 to 9:1 in terms of solid content.

A low NOx reduction rate of a typical method for reducing nitrogen oxide using an ammonia source, such as aqueous urea and the like, may be caused by lack of oxygen and/or a hydroxyl group required for reaction. The inventors of the present invention found that a NOx reduction rate of 65% or more can be achieved through addition of at least one nitrogen oxide-reducing aid selected from the group consisting of an oxygen radical or oxygen supply substance and a hydroxyl group supply substance. Such finding could not be anticipated considering that the main control strategy for reducing thermal NOx is to reduce the excess oxygen concentration. On the other hand, it should be understood that other mechanisms may be involved in improvement of the NOx reduction rate according to the present invention and are not limited to this theory.

The ammonia source may be selected from any substances, such as aqueous ammonia, aqueous urea or derivatives thereof, which can provide ammonia ($NH_3$), so long as the substance can remove NOx through reduction of NOx in a liquid phase. By way of example, the ammonia source may be 10% to 60% aqueous ammonia, derivatives of aqueous ammonia, aqueous urea, or a mixture thereof, or in a concentration of 20% to 50% or 35% to 45% w/v.

The nitrogen oxide-reducing aid may include at least one selected from the group consisting of an oxygen radical or oxygen supply substance and a hydroxyl group supply substance. The aid according to the present invention may be applied not only to the thermal NOx reduction technique but also to the fuel NOx reduction technique. Preferably, the nitrogen oxide-reducing aid include all of the oxygen radical or oxygen supply substance and the hydroxyl group supply substance in terms of further improvement in NOx reduction rate. That is, the nitrogen oxide-reducing aid including all of the oxygen radical or oxygen supply substance and the hydroxyl group supply substance is very advantageous in terms of improvement in NOx reduction rate. The weight ratio of the oxygen radical or oxygen supply substance to the hydroxyl group supply substance may be in the range of 8:2 to 2:8, specifically 7:3 to 4:6, more specifically 7:3 to 5:5.

According to the present invention, the nitrogen oxide-reducing aid may be provided in a liquid or solid phase. In one embodiment, the nitrogen oxide-reducing aid may be sprayed in a liquid phase. When the nitrogen oxide-reducing aid is provided in a liquid phase, the nitrogen oxide-reducing aid may contain water as a solvent in a concentration of 5% by weight (wt%) to 50 wt%, specifically 10 wt% to 30 wt%.

Examples of the oxygen radical or oxygen supply substance may include oxygen, oxides, or peroxides. Examples of the oxides, or peroxides may include hydrogen peroxide ($H_2O_2$), $K_2O$, $Na_2O$, $K_2O_2$, $Na_2O_2$, $Mg_2O_2$, sodium

perborate ($NaBO_3 \cdot nH_2O$, (n being an integer in the range of 0 to 4), $NaBO_2 \cdot H_2O_2 \cdot 3H_2Oa$, and the like), without being limited thereto.

Examples of the hydroxyl group supply substance may include glycerins, alcohols, and glycols. These may be used alone or as a mixture thereof. In particular, glycerins may be used in terms of reduction in nitrogen oxide and fine dust. Examples of the alcohols may include methanol, ethanol, and the like, examples, of the glycols may include methylene glycol, ethylene glycol, and propylene glycol, without being limited thereto.

The hydroxyl group supply substance may be provided in a liquid phase and may be present in an amount of 5 wt% to 50 wt%, specifically 10 wt% to 30 wt%.

The weight ratio of the ammonia source (A) to the nitrogen oxide-reducing aid (B) may be in the range of 5:5 to 9:1 in terms of solid content. Specifically, the weight ratio of the ammonia source (A) to the nitrogen oxide-reducing aid (B) may be in the range of 5:5 to 8:2. Within this range, the nitrogen oxide-reducing aid can be effective in reduction of NOx through promotion of reduction by ammonia.

The composition may further include borax. Further, the composition may be supplied to a combustion furnace at a temperature of 900°C to 1,100°C for reduction of nitrogen oxide.

According to the present invention, the composition for reducing nitrogen oxide may be provided in an amount of about 10% to about 70% of the volume of NOx to be treated, specifically about 20% to about 60%, more specifically about 40% to about 55%.

The composition for reducing nitrogen oxide may have a NOx reduction rate of 65% or more, specifically 70% or more, more specifically 75% or more, as calculated by Equation 1:

[Equation 1]

$$NO_{\%} \, reduction = \frac{C_{NOx_{in}} - C_{NOx_{out}}}{C_{NOx_{in}}} \times 100\%$$

where $C_{NOxin}$ denotes the concentration of NOx in a boiler before application of the composition for reducing nitrogen oxide to the boiler, and $C_{NOxout}$ denotes the concentration of NOx measured at a discharge port of the boiler after application of the composition for reducing nitrogen oxide thereto.

Herein, "NOx" is defined as nitrogen oxides where x (O/N ratio) is 1 or more, such as NO, $NO_2$, $N_2O_3$, and the like.

In addition, the composition for reducing nitrogen oxide may have a fine dust reduction rate of 20% or more, specifically 25% or more, more specifically 40% or more, as calculated by Equation 2:

[Equation 2]

$$\text{Fine Dust reduction} = \frac{Din - Dout}{Din} \times 100\%$$

where $D_{in}$ denotes the concentration ($\mu g/Nm^3$) of fine dust having a diameter of 10 $\mu$m in the boiler before application of the composition for reducing nitrogen oxide to the boiler, and $D_{out}$ denotes the concentration of fine dust measured at the discharge port of the boiler after application of the composition for reducing nitrogen oxide thereto.

According to the present invention, the composition for reducing nitrogen oxide may be supplied to a furnace at a temperature of 500°C to 1,200°C, specifically 700°C to 1,200°C, more specifically 900°C to 1,100°C.

According to the present invention, the composition for reducing nitrogen oxide may further include a compound for reduction of NOx or an additive for reducing fine dust. Examples of such a compound may include at least one nitrogen-containing reductant selected from among azanes, hydroxyl derivatives of azanes, and amines; rare earth elements; or iron oxides.

Another aspect of the present invention relates to an additive for reducing nitrogen oxide, which includes: at least one nitrogen oxide-reducing aid selected from the group consisting of an oxygen radical or oxygen supply substance and a hydroxyl group supply substance. Details of the nitrogen oxide-reducing aid are the same as described above and repeated description thereof will be omitted. The additive for reducing nitrogen oxide may be provided in a solid or liquid phase and may include other additives, for example, rare earth elements; iron oxides, and borax.

A further aspect of the present invention relates to a method for reducing nitrogen oxide, including:

supplying (A) at least one ammonia source selected from the group consisting of aqueous urea, aqueous ammonia and derivatives thereof to an NOx-containing exhaust gas or a boiler; and
supplying (B) at least one nitrogen oxide-reducing aid selected from the group consisting of an oxygen radical or oxygen supply substance and a hydroxyl group supply substance to the ammonia source, the NOx-containing exhaust gas or the boiler, wherein a weight ratio of the ammonia source (A) to the nitrogen oxide-reducing aid (B) is adjusted to be in the range of 5:5 to 9:1 in terms of solid content.

The ammonia source (A) may be supplied to the NOx-containing exhaust gas or the boiler at a temperature of 500°C to 1,200°C, specifically 700°C to 1,200°C, more specifically 900°C to 1,100°C. The ammonia source (A) may be supplied in the form of a gas stream, which may be heated by a heating device, for example, a heat exchanger, before being supplied to the exhaust gas or the boiler.

The nitrogen oxide-reducing aid (B) may be added to the ammonia source to be supplied as a mixture to the NOx-containing exhaust gas or the boiler, or may be directly supplied to the NOx-containing exhaust gas or the boiler. The nitrogen oxide-reducing aid (B) may be supplied to the NOx containing exhaust gas or the boiler at a temperature of 500°C to 1,200°C, specifically 700°C to 1,200°C, more specifically 900°C to 1,100°C. The nitrogen oxide-reducing aid (B) may be added in a solid phase or may be supplied in the form of an aqueous solution, an aqueous dispersant, or a gas stream. Here, the gas stream may be heated by a heating device, for example, a heat exchanger, before being supplied to the exhaust gas or the boiler.

In one embodiment, the nitrogen oxide-reducing aid (B) may be supplied through a pipe connected in a T shape to a supply line for supplying the ammonia source (A). A weight ratio of the ammonia source (A) to the nitrogen oxide-reducing aid (B) may be in the range of 5:5 to 9:1 in terms of solid content.

The method for reducing nitrogen oxide according to the present invention also provides an effect of reducing fine dust. Details of the method for reducing nitrogen oxide are the same as those of the composition for reducing nitrogen oxide and description thereof will be omitted herein.

Next, the present invention will be described in more detail with reference to some examples. It should be understood that these examples are provided for illustration only and are not to be in any way construed as limiting the present invention.

Preparative Example 1

A nitrogen oxide reducing composition 1 (weight ratio of urea to aid = about 5:3 in terms of sold content) was prepared by mixing 200 kg of liquid glycerin and 100 kg of a 35% hydrogen peroxide solution with 1,000 kg of 40% aqueous urea.

Preparative Example 2

A nitrogen oxide reducing composition 2 (weight ratio of urea to aid = about 4:3 in terms of sold content) was prepared by mixing 300 kg of liquid glycerin with 1,000 kg of 40% aqueous urea.

Preparative Example 3

A nitrogen oxide reducing composition 3 (weight ratio of urea to aid = about 4:1 in terms of sold content) was prepared by mixing 300 kg of a 35% hydrogen peroxide solution with 1,000 kg of 40% aqueous urea.

Preparative Example 4

A nitrogen oxide reducing composition 4 (weight ratio of urea to aid = about 5:3 in terms of sold content) was prepared by mixing 200 kg of liquid glycerin, 100 kg of a 35% hydrogen peroxide solution and 100 kg of borax with 1,000 kg of 40% aqueous urea.

Preparative Example 5

A nitrogen oxide reducing composition 5 was prepared using 1,300 kg of 40% aqueous urea.

Preparative Example 6

A nitrogen oxide reducing composition 6 (weight ratio of urea to aid = about 40:3) was prepared by mixing 95 kg of a 35% hydrogen peroxide solution with 1,000 kg of 40% aqueous urea.

Preparative Example 7

A nitrogen oxide reducing composition 7 (weight ratio of urea to aid = 40:3) was prepared by mixing 30 kg of liquid glycerin with 1,000 kg of 40% aqueous urea.

Preparative Example 8

A nitrogen oxide reducing composition 8 (weight ratio of urea to aid= 4:5) was prepared by mixing 500 kg of liquid glycerin with 1,000 kg of 40% aqueous urea.

Examples 1 to 4

At a furnace temperature of about 900°C, the prepared compositions 1 to 4 were sprayed at an injection rate of 50 kg/h into a boiler adapted to consume 200 kg of coal per day through a nozzle using a spray device.

Examples 5 to 8

At a furnace temperature of about 1,100°C, the prepared compositions 1 to 4 were sprayed at an injection rate of 50 kg/h into a boiler adapted to consume 200 kg of coal per day through a nozzle using a spray device.

Comparative Examples 1 to 4

At a furnace temperature of about 900°C, the prepared compositions 5 to 8 were sprayed at an injection rate of 50 kg/h into a boiler adapted to consume 200 kg of coal per day through a nozzle using a spray device.

Comparative Examples 5 to 8

At a furnace temperature of about 1,100°C, the prepared compositions 5 to 8 were sprayed at an injection rate of 50 kg/h into a boiler adapted to consume 200 kg of coal per day through a nozzle using a spray device.

Experimental Example

**Measurement of NOx reduction rate**

The concentration of NOx in a boiler before the composition prepared in each of Examples and Comparative Examples was supplied to the boiler, and the concentration of NOx in an exhaust gas discharged from a furnace of the boiler after the composition prepared in each of Examples and Comparative Examples was supplied thereto were measured, followed by measuring the NOx reduction rate according to Equation 1. Measurement results are shown in Table 1.

[Table 1]

$$NO_{\%} \, reduction = \frac{C_{No_{x\,in}} - C_{No_{x\,set}}}{C_{No_{x\,in}}} \times 100\%$$

In measurement of the NOx concentration, the concentration of NO and $NO_2$ was measured using a measurement instrument TESTO 350XL since the generated nitrogen oxide consisted of NO and $NO_2$.

**Measurement of fine dust reduction rate**

The concentration of fine dust in a boiler before the composition prepared in each of Examples and Comparative Examples was supplied to the boiler, and the concentration of fine dust in an exhaust gas discharged from a furnace of the boiler after the composition prepared in each of Examples and Comparative Examples was supplied thereto were measured (measurement instrument: TESTO 350XL), followed by measuring the fine dust reduction rate according to Equation 2. Measurement results are shown in Table 2.

[Equation 2]

$$\text{Fine Dust reduction} = \frac{Din - Dout}{Din} \text{ x } 100\%$$

where $D_{in}$ denotes the concentration ($\mu$g/Nm$^3$) of fine dust having a diameter of 10 $\mu$m in the boiler before application of the composition for reducing nitrogen oxide to the boiler, and $D_{out}$ denotes the concentration of fine dust measured at the discharge port of the boiler after application of the composition for reducing nitrogen oxide thereto.

Table 1

|  | $C_{NOxin}$ | $C_{NOxout}$ | NOx reduction rate (%) |
|---|---|---|---|
| Example 1 | 150 ppm | 40 ppm | 73% |
| Example2 | 152 ppm | 47 ppm | 69% |
| Example 3 | 148 ppm | 51 ppm | 66% |
| Example 4 | 151 ppm | 35 ppm | 77% |
| Example 5 | 153 ppm | 39 ppm | 74.5% |
| Example 6 | 154 ppm | 45 ppm | 71% |
| Example 7 | 149 ppm | 50 ppm | 66% |
| Example 8 | 150 ppm | 33 ppm | 78% |
| Comparative Example 1 | 148 ppm | 60 ppm | 59% |
| Comparative Example 2 | 151 ppm | 59 ppm | 61% |
| Comparative Example 3 | 153 ppm | 60 ppm | 60% |
| Comparative Example 4 | 154 ppm | 62 ppm | 59% |
| Comparative Example 5 | 152 ppm | 58 ppm | 62% |
| Comparative Example 6 | 148 ppm | 57 ppm | 61% |
| Comparative Example 7 | 151 ppm | 57 ppm | 62% |
| Comparative Example 8 | 151 ppm | 56 ppm | 63% |

Table2

|  | $D_{in}$ ($\mu$g/Nm$^3$) | $D_{out}$ ($\mu$g/Nm$^3$) | Fine dust reduction rate (%) |
|---|---|---|---|
| Example 1 | 30 | 18 | 40% |
| Example 2 | 29 | 22 | 24% |
| Example 3 | 34 | 25 | 26% |
| Example 4 | 32 | 15 | 53% |
| Example 5 | 35 | 22 | 37% |
| Example 6 | 36 | 26 | 28% |
| Example 7 | 40 | 30 | 25% |
| Example 8 | 41 | 24 | 41% |

Claims

1. A composition for reducing nitrogen oxide, comprising:

   (A) at least one ammonia source selected from the group consisting of aqueous urea, aqueous ammonia and derivatives thereof; and
   (B) at least one nitrogen oxide-reducing aid selected from the group consisting of an oxygen radical or oxygen supply substance and a hydroxyl group supply substance,

   wherein a weight ratio of the ammonia source (A) to the nitrogen oxide-reducing aid (B) is in the range of 5:5 to 9:1 in terms of solid content.

2. The composition for reducing nitrogen oxide according to claim 1, wherein the composition has a NOx reduction rate of 65% or more, as calculated by Equation 1:

$$NO_\% \; reduction = \frac{C_{NOxin} - C_{NOxout}}{C_{NOxin}} \times 100\%$$

   where $C_{NOxin}$ denotes the concentration of NOx in a boiler before application of the composition for reducing nitrogen oxide to the boiler, and $C_{NOxout}$ denotes the concentration of NOx measured at a discharge port of the boiler after application of the composition for reducing nitrogen oxide thereto.

3. The composition for reducing nitrogen oxide according to claim 1, wherein the oxygen radical or oxygen supply substance comprises oxygen, oxides, or peroxides.

4. The composition for reducing nitrogen oxide according to claim 1, wherein the hydroxyl group supply substance comprises glycerins, alcohols, or glycols.

5. The composition for reducing nitrogen oxide according to claim 4, wherein the alcohols comprise methanol, ethanol, or a mixture thereof.

6. The composition for reducing nitrogen oxide according to claim 4, wherein the glycols comprise methylene glycol, ethylene glycol, propylene glycol, or a mixture thereof.

7. The composition for reducing nitrogen oxide according to claim 1, further comprising: borax.

8. The composition for reducing nitrogen oxide according to claim 1, wherein the composition is applied to a furnace in a temperature range of 900°C to 1,100°C.

9. The composition for reducing nitrogen oxide according to any one of claims 1 to 8, wherein the composition has a fine dust reduction rate of 20% or more, as calculated by Equation 2:

$$\text{Fine Dust reduction} = \frac{Din - Dout}{Din} \times 100\%$$

   where $D_{in}$ denotes the concentration ($\mu g/Nm^3$) of fine dust having a diameter of 10 $\mu$m in the boiler before application of the composition for reducing nitrogen oxide to the boiler, and $D_{out}$ denotes the concentration of fine dust measured at the discharge port of the boiler after application of the composition for reducing nitrogen oxide thereto.

10. The composition for reducing nitrogen oxide according to any one of claims 1 to 8, wherein the composition comprises all of the oxygen radical or oxygen supply substance and the hydroxyl group supply substance.

11. The composition for reducing nitrogen oxide according to claim 10, wherein a weight ratio of the oxygen radical or oxygen supply substance to the hydroxyl group supply substance is in the range of 8:2 to 2:8.

12. The composition for reducing nitrogen oxide according to any one of claims 1 to 8, further comprising:
    at least one nitrogen-containing reductant selected from among azanes, hydroxyl derivatives of azanes, and amines;

rare earth elements; or iron oxides.

13. A method for reducing nitrogen oxide, comprising:

supplying (A) at least one ammonia source selected from the group consisting of aqueous urea, aqueous ammonia and derivatives thereof to an NOx-containing exhaust gas or a boiler; and
supplying (B) at least one nitrogen oxide-reducing aid selected from the group consisting of an oxygen radical or oxygen supply substance and a hydroxyl group supply substance to the ammonia source, the NOx-containing exhaust gas or the boiler,
wherein a weight ratio of the ammonia source (A) to the nitrogen oxide-reducing aid (B) is adjusted to be in the range of 5:5 to 9:1 in terms of solid content.

14. The method for reducing nitrogen oxide according to claim 13, wherein the ammonia source (A) or the nitrogen oxide-reducing aid (B) is supplied to the NOx containing exhaust gas or the boiler at a temperature of 900°C to 1,100°C.

15. The method for reducing nitrogen oxide according to claim 13, wherein the nitrogen oxide-reducing aid comprises all of the oxygen radical or oxygen supply substance and the hydroxyl group supply substance.

16. The method for reducing nitrogen oxide according to claim 13, further comprising:
adding borax to the ammonia source, the NOx-containing exhaust gas, or the boiler.

17. The method for reducing nitrogen oxide according to any one of claims 13 to 16, further comprising: reducing fine dust.

18. An additive for reducing nitrogen oxide, comprising: at least one nitrogen oxide-reducing aid selected from the group consisting of an oxygen radical or oxygen supply substance and a hydroxyl group supply substance, the additive assisting in reduction of nitrogen oxide by an ammonia source.

19. The additive for reducing nitrogen oxide according to claim 18, comprising: all of the oxygen radical or oxygen supply substance and the hydroxyl group supply substance.

20. The additive for reducing nitrogen oxide according to claim 18, further comprising: borax.

21. The additive for reducing nitrogen oxide according to claim 20, wherein the additive is supplied to a boiler at a temperature of 900°C to 1,100°C.


**Amended claims under Art. 19.1 PCT**

1. A composition for reducing nitrogen oxide, comprising:

(A) at least one ammonia source selected from the group consisting of aqueous urea, aqueous ammonia and derivatives thereof;
(B) at least one nitrogen oxide-reducing aid comprising an oxygen radical or oxygen supply substance and glycerins; and
(C) borax,

wherein a weight ratio of the ammonia source (A) to the nitrogen oxide-reducing aid (B) is in the range of 5:5 to 9:1 in terms of solid content,
wherein the composition is supplied to a boiler at a temperature of 900°C to 1,100°C,
wherein the composition has a NOx reduction rate of 70% or more, as calculated by Equation 1:

$$NO_{\%} \, reduction = \frac{C_{NOx_{in}} - C_{NOx_{out}}}{C_{NOx_{in}}} \times 100\%$$

where $C_{NOxin}$ denotes the concentration of NOx in a boiler before application of the composition for reducing nitrogen oxide to the boiler, and $C_{NOxout}$ denotes the concentration of NOx measured at a discharge port of the boiler after application of the composition for reducing nitrogen oxide thereto.

2. The composition for reducing nitrogen oxide according to claim 1, wherein the NOx reduction rate of the composition as calculated by Equation 1 is 75% or more.

3. The composition for reducing nitrogen oxide according to claim 1, wherein the nitrogen oxide-reducing aid further comprises alcohols or glycols.

4. The composition for reducing nitrogen oxide according to claim 3, wherein wherein the alcohols comprise methanol, ethanol, or a mixture thereof.

5. The composition for reducing nitrogen oxide according to claim 3, wherein the glycols comprise methylene glycol, ethylene glycol, propylene glycol, or a mixture thereof.

6. The composition for reducing nitrogen oxide according to any one of claims 1 to 5, wherein the oxygen radical or oxygen supply substance comprises oxygen, oxides, or peroxides.

7. The composition for reducing nitrogen oxide according to any one of claims 1 to 5, wherein the composition has a fine dust reduction rate of 25% or more, as calculated by Equation 2:

$$\text{Fine Dust reduction} = \frac{Din - Dout}{Din} \times 100\%$$

where $D_{in}$ denotes the concentration ($\mu g/Nm^3$) of fine dust having a diameter of 10 $\mu m$ in the boiler before application of the composition for reducing nitrogen oxide to the boiler, and $D_{out}$ denotes the concentration of fine dust measured at the discharge port of the boiler after application of the composition for reducing nitrogen oxide thereto.

8. The composition for reducing nitrogen oxide according to any one of claims 1 to 5, wherein a weight ratio of the oxygen radical or oxygen supply substance to the glycerin is in the range of 8:2 to 2:8.

9. The composition for reducing nitrogen oxide according to any one of claims 1 to 5, further comprising:
at least one nitrogen-containing reductant selected from among azanes, hydroxyl derivatives of azanes, and amines; rare earth elements; or iron oxides.

10. A method for reducing nitrogen oxide, comprising:

supplying (A) at least one ammonia source selected from the group consisting of aqueous urea, aqueous ammonia and derivatives thereof to an NOx-containing exhaust gas or a boiler; and
supplying (B) at least one nitrogen oxide-reducing aid comprising an oxygen radical or oxygen supply substance and glycerin, and (C) borax to the ammonia source, the NOx-containing exhaust gas or the boiler,
wherein a weight ratio of the ammonia source (A) to the nitrogen oxide-reducing aid (B) is adjusted to be in the range of 5:5 to 9:1 in terms of solid content.
wherein the ammonia source, nitrogen oxide-reducing aid and the borax is supplied to the ammonia source, NOx-containing exhaust gas or a boiler at a temperature of 900°C to 1,100°C,

11. The method for reducing nitrogen oxide according to claim 10, further comprising: reducing fine dust.

12. An additive for reducing nitrogen oxide, comprising: at least one nitrogen oxide-reducing aid comprising an oxygen radical or oxygen supply substance and glycerin, and borax, the additive assisting in reduction of nitrogen oxide by an ammonia source, wherein the additive is supplied to a boiler at a temperature of 900°C to 1,100°C.

13. A composition for reducing nitrogen oxide, prepared from

(A) at least one ammonia source selected from the group consisting of aqueous urea, aqueous ammonia and derivatives thereof; and
(B) at least one nitrogen oxide-reducing aid comprising an oxygen radical or oxygen supply substance and glycerins,

wherein the composition further comprises (C) borax,

wherein a weight ratio of the ammonia source (A) to the nitrogen oxide-reducing aid (B) is in the range of 5:5 to 9:1 in terms of solid content,
wherein the composition is supplied to a boiler at a temperature of 900°C to 1,100°C,
wherein the composition has a NOx reduction rate of 70% or more, as calculated by

Equation 1:

$$NO_\% \ reduction = \frac{C_{NO_{xin}} - C_{NO_{xout}}}{C_{NO_{xin}}} \times 100\%$$

where $C_{NOxin}$ denotes the concentration of NOx in a boiler before application of the composition for reducing nitrogen oxide to the boiler, and $C_{NOxout}$ denotes the concentration of NOx measured at a discharge port of the boiler after application of the composition for reducing nitrogen oxide thereto,
wherein the composition has a fine dust reduction rate of 25% or more, as calculated by Equation 2:

$$Fine \ Dust \ reduction = \frac{Din - Dout}{Din} \ x \ 100\%$$

where $D_{in}$ denotes the concentration ($\mu g/Nm^3$) of fine dust having a diameter of 10 $\mu m$ in the boiler before application of the composition for reducing nitrogen oxide to the boiler, and $D_{out}$ denotes the concentration of fine dust measured at the discharge port of the boiler after application of the composition for reducing nitrogen oxide thereto.

<table>
<tr><td colspan="2">INTERNATIONAL SEARCH REPORT</td><td colspan="2">International application No.<br>**PCT/KR2020/006562**</td></tr>
</table>

**A. CLASSIFICATION OF SUBJECT MATTER**

*B01D 53/79(2006.01)i, B01D 53/78(2006.01)i, B01D 53/56(2006.01)i*

According to International Patent Classification (IPC) or to both national classification and IPC

**B. FIELDS SEARCHED**

Minimum documentation searched (classification system followed by classification symbols)

B01D 53/79; B01D 47/06; B01D 53/34; B01D 53/50; B01D 53/56; B01D 53/86; B01D 53/94; C08G 63/12; F23J 15/00; B01D 53/78

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: nitrogen oxide, urea, ammonia, temperature, fine dust

**C. DOCUMENTS CONSIDERED TO BE RELEVANT**

| Category* | Citation of document, with indication, where appropriate, of the relevant passages | Relevant to claim No. |
|---|---|---|
| X | KR 10-0197287 B1 (HANMO CORPORATION) 15 June 1999<br>See abstract; pages 3-4; claims 5-6; and figures 1-4. | 1-5,7-21 |
| Y | | 6 |
| Y | KR 10-2017-0118214 A (YONGFENG BOYUAN INDUSTRY CO., LTD., JIANGXI PROVINCE)<br>24 October 2017<br>See claims 1-5. | 6 |
| A | KR 10-1910874 B1 (EMKO CO., LTD.) 24 October 2018<br>See the entire document. | 1-21 |
| A | KR 10-1807996 B1 (BLUE BIRD CO., LTD.) 12 December 2017<br>See the entire document. | 1-21 |
| A | KR 10-2014-0121129 A (HYUNDAI HEAVY INDUSTRIES CO., LTD.) 15 October 2014<br>See the entire document. | 1-21 |
| PX | KR 10-2104050 B1 (OH, Mi Hye et al.) 24 April 2020<br>See claims 1-7, 9-11, 14-15 and 18.<br><br>※ The above document is the registered document for the priority of the present international application. | 1-21 |

☐ Further documents are listed in the continuation of Box C. ☒ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 SEPTEMBER 2020 (10.09.2020) | **11 SEPTEMBER 2020 (11.09.2020)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2020/006562**

| Patent document cited in search report | Publication date | Patent family member | Publication date |
|---|---|---|---|
| KR 10-0197287 B1 | 15/06/1999 | KR 10-1997-0073702 A | 10/12/1997 |
| KR 10-2017-0118214 A | 24/10/2017 | CN 106031844 A | 19/10/2016 |
| | | CN 106031844 B | 07/01/2020 |
| | | EP 3272413 A1 | 24/01/2018 |
| | | JP 2018-509288 A | 05/04/2018 |
| | | JP 6538185 B2 | 03/07/2019 |
| | | KR 10-2009162 B1 | 21/10/2019 |
| | | US 10124289 B2 | 13/11/2018 |
| | | US 2018-0043302 A1 | 15/02/2018 |
| | | WO 2016-150302 A1 | 29/09/2016 |
| KR 10-1910874 B1 | 24/10/2018 | None | |
| KR 10-1807996 B1 | 12/12/2017 | None | |
| KR 10-2014-0121129 A | 15/10/2014 | None | |
| KR 10-2104050 B1 | 24/04/2020 | None | |

Form PCT/ISA/210 (patent family annex) (January 2015)